# EUROPEAN PATENT APPLICATION

(11) **EP 4 716 094 A1**
(43) Date of publication of application: **25.03.2026**
(21) Application number: 24799909.7
(22) Date of filing: 26.06.2024
(51) Int. Cl.: H02S 50/00

(54) **INTERACTIVE AUTOMATED MANAGEMENT METHOD AND SYSTEM FOR PHOTOVOLTAIC POWER STATION**

(30) Priority: 30.04.2023 CN 202310482400; 18.03.2024 CN 202410305025
(71) Applicant: Shanghai Sigeyuan Intelligent Technology Co., Ltd., Shanghai 200000 (CN)
(72) Inventor: CHANG, Hao, Shanghai 200000 (CN); JIANG, Chao, Shanghai 200000 (CN); YANG, Weizhong, Shanghai 200000 (CN)
(74) Representative: Bayramoglu et al.
(86) International application number: PCT/CN2024/101763
(87) International publication number: WO 2024/227453

(57) **Abstract**

The present disclosure relates to an interactive automated management method and system for a photovoltaic (PV) power station, which operate based on the abnormality detection of the PV power station. When an abnormality occurs, a natural language-based inquiry instruction is generated and sent to a user to determine a condition related to the abnormality, such as an environmental condition, a manual adjustment made to electricity consumption, and external equipment damage. Through effective iterative interactions with the user, a false alarm caused by the environmental condition is avoided, thereby improving the abnormality handling efficiency, saving human and material resources, reducing operation and maintenance costs, and effectively enhancing user experience.

## Description

### TECHNICAL FIELD

The present disclosure relates to the technical field of photovoltaic (PV) control, specifically to the technical field of PV power station management, and in particular to an interactive automated management method and system for a PV power station.

### BACKGROUND TECHNOLOGY

The PV power station is a power generation system that harnesses solar energy, includes electronic components made of special materials such as crystalline silicon panels and inverters, and is connected to and supplies power to the power grid. Generally, the PV power station includes equipment such as a solar cell array, a storage battery pack, a battery management system (BMS), a charge-discharge controller, an inverter, an alternating current (AC) distribution cabinet, and a solar tracking control system. During the operating of the PV power station, various working parameters, such as power parameters, ground insulation resistance, power generation efficiency, and electricity consumption, are fed back to the cloud side. Remote management is enabled through data storage and analysis on the cloud side, and the cloud side and the device side together constitute the PV power station management system. As an operation and maintenance system for PV power stations, the PV power station management system plays a crucial role in sustaining the normal operation of PV power stations. It can actively issue alarms or alert users when an abnormality occurs within the PV power station.

However, changes in the external environment or users' electricity consumption habits can inevitably lead to false alarms. Due to the lack of effective user interaction, the PV power station management methods in the prior art cannot resolve these false alarms in a timely and effective manner. Instead, they rely on cumbersome back-end troubleshooting procedures to identify abnormalities, resulting in low efficiency and waste of resources. For example, if the BMS reports an abnormal battery temperature rise, the PV power station management system will analyze the cause of the temperature rise by inspecting and troubleshooting each circuit node and conducting internal battery testing. However, the temperature rise may also be caused by elevated ambient temperature around the battery. If user self-inspection and information interaction are incorporated, troubleshooting can be completed more quickly.

Therefore, developing a user-oriented interactive automated management method and system for PV power stations is a pressing technical problem.

### CONTENT OF THE INVENTION

To overcome at least one of the aforementioned drawbacks, a primary objective of the present disclosure is to provide an interactive automated management method for a PV power station, which can automatically resolve an abnormality and specifically provide a guided troubleshooting solution.

To overcome at least one of the aforementioned drawbacks, a primary objective of the present disclosure is to provide an interactive automated management system for a PV power station, which can automatically resolve an abnormality.

In order to achieve the above objectives, the present disclosure adopts the following technical solutions:
The present disclosure provides an interactive automated management method for a PV power station, including following processing steps:
S1: performing status detection on a PV power station, and sending detection information to a cloud side;
S2: determining whether there is an abnormality according to the detection information, outputting an abnormality instruction if there is an abnormality, and parsing and processing the abnormality instruction to generate an inquiry instruction;
S3: displaying the inquiry instruction to a user, and feeding back, by the user, reply information; and
S4: determining, according to the reply information, whether to send a further inquiry instruction to the user for an inquiry, or to send an execution instruction to the PV power station, such that according to the execution instruction, the PV power station performs an action to resolve the abnormality or conducts self-inspection and reports the abnormality.

According to an implementation of the present disclosure, the parsing and processing the abnormality instruction includes: retrieving targeted data matching the abnormality instruction from a PV standard database, and generating the inquiry instruction.

According to an implementation of the present disclosure, the retrieving targeted data matching the abnormality instruction from a PV standard database, and generating the inquiry instruction includes:
reading and processing, by a large language model (LLM), the retrieved targeted data to generate the inquiry instruction.

According to an implementation of the present disclosure, the LLM is a chat generative pre-trained transformer (ChatGPT) model.

According to an implementation of the present disclosure, the reading and processing, by an LLM, the retrieved targeted data to generate the inquiry instruction includes:
sorting the targeted data to generate a plurality of pieces of interaction data, forming the inquiry instruction by the plurality of pieces of interaction data, and performing an interaction with the user according to the plurality of pieces of interaction data in sequence when displaying the inquiry instruction to the user.

According to an implementation of the present disclosure, the interactive automated management method for a PV power station includes: converging, when performing the interaction with the user according to the plurality of pieces of interaction data in sequence, the interaction data based on the reply information fed back by the user.

According to an implementation of the present disclosure, the targeted data matching the abnormality instruction refers to an environmental factor or a human factor causing the abnormality.

According to an implementation of the present disclosure, the determining whether there is an abnormality according to the detection information, outputting an abnormality instruction if there is an abnormality, and parsing and processing the abnormality instruction to generate an inquiry instruction includes: retrieving the environmental factor causing the abnormality from the PV standard database, and generating a natural language-based first inquiry instruction;
performing information convergence on the first inquiry instruction after performing an interaction with the user to acquire reply information, retrieving a second inquiry instruction matching data obtained after the information convergence from the PV standard database, and repeating information convergence and retrieving until a cause of the abnormality is determined; and
generating the execution instruction according to the determined cause of the abnormality, such that the PV power station performs the action to resolve the abnormality or conducts self-inspection and reports the abnormality, according to the execution instruction.

According to an implementation of the present disclosure, the interactive automated management method for a PV power station includes: performing information convergence on the first inquiry instruction after performing an interaction with the user to acquire reply information, gradually converging from the environmental factor to a non-environmental factor.

According to an implementation of the present disclosure, the interactive automated management method for a PV power station includes: updating a basic parameter of a detection model corresponding to the PV power station according to the reply information of the user, and analyzing the abnormality of the PV power station based on the updated detection model.

According to an implementation of the present disclosure, in the step S4, the determining, according to the reply information, whether to send a further inquiry instruction to the user for an inquiry, or to send an execution instruction to the PV power station includes:
confirming the abnormality instruction based on the reply information, generating an execution strategy by performing retrieval and invocation in the PV standard database, and sending the execution instruction, such that the PV power station performs the corresponding action to resolve the abnormality upon receiving the execution instruction.

According to an implementation of the present disclosure, the PV standard database includes an application programming interface (API) invocation document, a product specification, and PV industry technical data.

According to an implementation of the present disclosure, the inquiry instruction is a natural language-based output instruction.

According to an implementation of the present disclosure, the abnormality instruction includes a fault instruction, a power abnormality instruction, an electricity consumption abnormality instruction, and a battery management system (BMS) alarm instruction.

According to an implementation of the present disclosure, the step S2 and the step S4 are implemented on a cloud side, on an application (APP) terminal, or at the PV power station.

According to an implementation of the present disclosure, the step S3 is implemented on an APP terminal.

According to an implementation of the present disclosure, the reply information is input by the user via the APP terminal and is in the form of voice or text.

In particular, the present disclosure further provides an interactive automated management system for a PV power station, including:
an equipment monitoring unit, configured to perform status detection on a PV power station, record detection information, and send the detection information to an analysis and management unit;
the analysis and management unit, configured to receive the detection information, determine whether there is an abnormality according to the detection information, output an abnormality instruction if there is an abnormality, parse and process the abnormality instruction to generate an inquiry instruction, and send the inquiry instruction to an APP terminal; and
the APP terminal, provided on a user side, and configured to receive and display the inquiry instruction to a user, where the user inputs reply information via the APP terminal, and the reply information is sent to the analysis and management unit;
where, according to the reply information, the analysis and management unit determines whether to send a further inquiry instruction to the user for an inquiry, or to send an execution instruction to the PV power station, such that according to the execution instruction, the PV power station performs an action to resolve the abnormality or conducts self-inspection and reports the abnormality.

According to an implementation of the present disclosure, the analysis and management unit includes:
an input preprocessing module, configured to receive the abnormality instruction and perform feature extraction on the abnormality instruction to generate valid feature data;
a context-based comprehensive processing module, connected to the input preprocessing module, and configured to receive the valid feature data, and retrieve data matching the valid feature data to generate a comprehensive input instruction; and
an LLM, connected to the input preprocessing module, and configured to receive and process the comprehensive input instruction to generate the inquiry instruction or the execution instruction.

According to an implementation of the present disclosure, the analysis and management unit further includes a memory storage module; and the memory storage module is configured to store PV standard data and real-time interaction data and is connected to the context-based comprehensive processing module.

According to an implementation of the present disclosure, the memory storage module includes a permanent storage sub-module and a flash storage sub-module; the permanent storage sub-module is configured to store the PV standard data; and the flash storage sub-module is configured to store the real-time interaction data.

According to an implementation of the present disclosure, the memory storage module includes a storage management sub-module; and the storage management sub-module is connected to the LLM, and is configured to receive and update the inquiry instruction and fed-back reply information into the real-time interaction data.

According to an implementation of the present disclosure, the analysis and management unit further includes an output parsing module; the output parsing module is configured to receive and parse the execution instruction to generate a control instruction; the control instruction is in a machine language format resulting from format parsing; and the PV power station receives and executes the control instruction to resolve the abnormality or conduct self-inspection and report the abnormality.

According to an implementation of the present disclosure, the analysis and management unit is provided on a cloud side, on the APP terminal, or at the PV power station.

In particular, the present disclosure further provides a computing device, including a memory, a processor, and a computer program stored in the memory and executable on the processor, where the computer program is executed by the processor to implement the aforementioned method.

The present disclosure further provides a computer-readable storage medium, where the computer-readable storage medium is configured to store a computer program, and the computer program is executed by a processor to implement the aforementioned method. The computer-readable storage medium is preferably a non-transitory readable storage medium.

Compared with the prior art, the interactive automated management method and system for a PV power station according to the present disclosure have the following advantages and beneficial effects:
The interactive automated management method for a PV power station in the present disclosure is based on the abnormality detection of the PV power station. When an abnormality occurs, a natural language-based inquiry instruction is generated and sent to the user to determine a condition related to the abnormality, such as an environmental condition, a manual adjustment made to electricity consumption, and external equipment damage. Through effective iterative interactions with the user, a false alarm caused by the environmental condition is avoided, thereby improving the abnormality handling efficiency, saving human and material resources, reducing operation and maintenance costs, and effectively enhancing user experience.

The analysis and management unit of the interactive automated management system for a PV power station in the present disclosure is provided on the cloud side or the APP terminal. The user input on the interaction side is simplified, such that the user only needs to reply to the inquiry instructions via voice or text input. This facilitates information interaction between the user and the analysis and processing unit, lowers the technical threshold for the user to reply to questions, and makes the user more proactive in cooperating with abnormality resolving. It not only enhances user experience but also enables better management of the PV power station.

Moreover, the present disclosure innovatively introduces an LLM (such as the ChatGPT model), which includes an input side for receiving retrieved abnormality instructions in text form and an output side for providing natural language-based inquiry instructions or execution instructions. Both front-end input and back-end processing and output are implemented based on natural language processing, which aligns with the usage needs of conventional users. During the final specific execution, the natural language-based execution instruction is converted into a corresponding format (i.e. converted into a control instruction) for specific execution. This reduces the processing difficulty of PV information, better meets user needs, improves processing efficiency, and enables the automation of abnormality handling.

### DESCRIPTION OF THE DRAWINGS

Some specific embodiments of the present disclosure will be described in detail below in an illustrative rather than restrictive manner with reference to the drawings. The same reference numerals in the drawings refer to like or similar components or parts. Those skilled in the art should understand that the drawings are not plotted to scale. In the drawings:
FIG. 1 is a schematic flowchart of an interactive automated management method for a photovoltaic (PV) power station according to an embodiment of the present disclosure;
FIG. 2 is a structural block diagram of an interactive automated management system for a PV power station according to an embodiment of the present disclosure;
FIG. 3 is a structural diagram of a computing device according to another embodiment of the present disclosure;
FIG. 4 is a structural diagram of a computer-readable storage medium according to another embodiment of the present disclosure; and
FIG. 5 is a structural block diagram of an interactive automated management system for a PV power station according to another embodiment of the present disclosure.

### SPECIFIC IMPLEMENTATIONS

The following clearly and completely describes the technical solutions of the present disclosure with reference to drawings. Apparently, the described embodiments are merely some rather than all of the embodiments of the present disclosure. All other embodiments obtained by a person of ordinary skill in the art based on the embodiments of the present disclosure without creative efforts shall fall within the protection scope of the present disclosure.

In addition, the technical features involved in the various implementations of the present disclosure described below may be combined with each other as long as they do not constitute a conflict with each other.

### Embodiment 1

The embodiment provides an interactive automated management method for a PV power station, including following processing steps.

S1. Status detection is performed on a PV power station, and detection information is sent to a cloud side.

S2. It is determined whether there is an abnormality according to the detection information. If there is an abnormality, an abnormality instruction is output, and targeted data matching the abnormality instruction is retrieved from a PV standard database and read and processed by an LLM to generate an inquiry instruction.

S3. The inquiry instruction is displayed to a user, and the user feeds back reply information.

S4. According to the reply information, it is determined whether to send a further inquiry instruction to the user for an inquiry, or to send an execution instruction to the PV power station, such that according to the execution instruction, the PV power station performs an action to resolve the abnormality or conducts self-inspection and reports the abnormality.

In an implementation, when the LLM reads and processes the retrieved targeted data to generate the inquiry instruction, the targeted data is sorted to generate a plurality of pieces of interaction data, and the plurality of pieces of interaction data forms the inquiry instruction. An interaction with the user is performed according to the plurality of pieces of interaction data in sequence when the inquiry instruction is displayed to the user. When the interaction with the user is performed according to the plurality of pieces of interaction data in sequence when the inquiry instruction is displayed to the user, the interaction data is converged based on the reply information fed back by the user.

In an implementation, the targeted data matching the abnormality instruction refers to an environmental factor or a human factor causing the abnormality.

In an implementation, when it is determined whether there is an abnormality according to the detection information, an abnormality instruction is output if there is an abnormality, and the abnormality instruction is parsed and processed to generate an inquiry instruction. Specifically, the environmental factor causing the abnormality is retrieved from the PV standard database, and a natural language-based first inquiry instruction is generated. The first inquiry instruction includes a plurality of instructions, with relevance and hierarchy between each instruction, and can be gradually converged according to the user's subsequent reply information.

The inquiry instruction is displayed to the user based on the abnormality or fault information of the PV power station. The user can reply in the form of text, voice, or image, etc. The interactive instruction data is converged according to the user's reply information, and a converged second inquiry instruction is further sent to the user, and a further interaction with the user is then performed. This step is repeated until the cause of the abnormality is determined.

During the generation of the inquiry instruction, possible environmental factors such as environmental changes and manual adjustments made to electricity consumption are first investigated. If the environmental factors are abnormal and may cause a false fault alarm, the inquiry instruction is converged within the scope of external environmental factors, such as inquiring of the user about "the ambient temperature" or "whether the power grid is under maintenance". If the environmental factors are normal or unlikely to cause a false fault alarm, the inquiry instruction is gradually converged to the scope of non-environmental factors, and the user replies with equipment information such as equipment wiring condition and equipment housing health condition in response to the inquiry instruction. It can be seen that through the real-time and effective interaction with the user, environmental conditions can be ascertained relatively quickly, and then the environmental factors responsible for the abnormality can be effectively identified. If the abnormality is not caused by environmental factors, they can be effectively ruled out. Thus, the first inquiry instruction undergoes information convergence after the interaction with the user to acquire the reply information, gradually converging from environmental factors to non-environmental factors.

It can be understood that information convergence is performed on the first inquiry instruction after an interaction with the user is performed to acquire reply information, a second inquiry instruction matching data obtained after the information convergence is retrieved from the PV standard database, and the step is repeated until a cause of the abnormality is determined. The execution instruction is generated according to the determined cause of the abnormality, such that the PV power station performs the action to resolve the abnormality or conducts self-inspection and reports the abnormality, according to the execution instruction.

After the specific cause of the abnormality is determined based on the interactive information provided in the user's reply, on the one hand, an execution strategy is generated and the execution instruction is sent. Upon receiving the execution instruction, the PV power station performs a corresponding action to resolve the abnormality in response to the fault abnormality instruction or initiate self-inspection. On the other hand, the LLM continues to interact with the user to obtain the label of the scenario where the abnormality occurs. Based on the label of the abnormality alarm, the fault detection model is switched or undergoes self-learning. The switched model or the trained and updated model is then used for abnormality detection, thereby improving the accuracy of fault detection and reducing false alarms.

When troubleshooting abnormalities of PV power stations, the prior art establishes a relevant detection model to achieve rapid determination of abnormalities. The interactive automated management method in the embodiment of the present disclosure can update the basic parameters of the detection model corresponding to the PV power station according to the user's reply information, and analyze abnormalities of the PV power station based on the updated detection model.

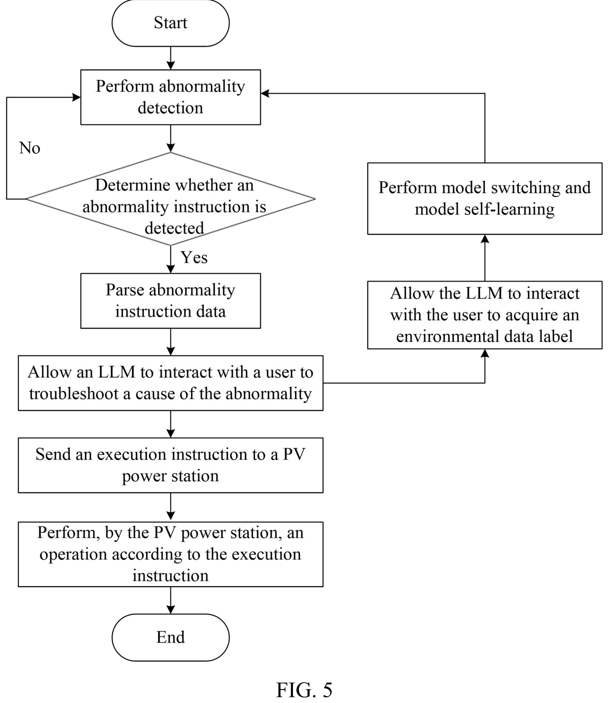

As shown in FIG. 5, in the embodiment, during abnormality detection, if an abnormality is detected in the PV power station, an abnormality instruction is obtained through analysis. The abnormality instruction is parsed to obtain visible factors causing the abnormality, rather than factors related to internal equipment operation faults, i.e., environmental factors such as loose terminals and manual modification of wiring. Based on these environmental factors, a plurality of natural language-based inquiry instructions are generated, such as "Is there any manual modification of power lines being carried out on the site?", "Please confirm whether the connection terminal of the *-th string is loose or disconnected?", "Please upload photos of the terminal connections", and "What is the distance between the solar panel and the equipment?". The above instructions can be regarded as inquiry instructions.

Interactions with the user are performed via the APP terminal or other terminals, and inquiry instructions are displayed to troubleshoot external environmental factors. For example, if the user replies "No" to the first inquiry instruction "Is there any manual modification of power lines being carried out on the site?", the inquiry instruction is converged to the scope of non-environmental factors, and a second inquiry instruction "Please confirm whether the connection terminal of the *-th string is loose or disconnected?" is sent to the user. If the user replies "Yes", a further inquiry instruction "Please upload photos of the terminal connections" is sent to the user. This process is repeated until the cause of the abnormality is finally determined.

After the cause of the abnormality is determined based on the user's reply to the inquiry instruction, the LLM generates an execution strategy and sends the execution instruction. The PV power station executes a corresponding operation after the execution instruction is parsed.

In addition, after the inquiry instruction "What is the distance between the solar panel and the equipment?" is sent to the user, the environmental data labels of the user's PV power station are obtained based on the user's reply information. Based on the update of the environmental label data, switching or self-learning of the equipment abnormality detection model is performed. The updated detection model is then used for abnormality detection. This model is switched or trained according to the user's on-site data labels, aligning with the actual working scenario of the PV power station and improving the detection accuracy.

In an implementation, when it is determined according to the reply information whether to send a further inquiry instruction to the user for an inquiry, or to send an execution instruction to the PV power station, the abnormality instruction is confirmed based on the reply information, an execution strategy is generated by performing retrieval and invocation in the PV standard database, and the execution instruction is sent, such that the PV power station performs the corresponding action to resolve the abnormality upon receiving the execution instruction.

In an implementation, the LLM is a chat generative pre-trained transformer (ChatGPT) model.

In an implementation, the PV standard database includes an application programming interface (API) invocation document, a product specification, and PV industry technical data.

In an implementation, the inquiry instruction is a natural language-based output instruction; and the abnormality instruction includes a fault instruction, a power abnormality instruction, an electricity consumption abnormality instruction, and a battery management system (BMS) alarm instruction.

In an implementation, the step S2 and the step S4 are implemented on a cloud side, on an application (APP) terminal, or at the PV power station; and the step S3 is implemented on the APP terminal. The specific analysis and output process of the inquiry instruction is preferably performed on the cloud side with strong processing capabilities. However, it can also be performed on the APP terminal or at the PV power station, although it requires greater analysis and processing capabilities. It can be adjusted according to the user's usage needs and data processing performance of each side. Moreover, the functional modules in the analysis and management unit can be reasonably split and arranged on one of the APP terminal, the cloud side, and the PV power station. That is to say, the processing of the analysis and management unit is achieved by combining the functional modules of the APP terminal, the cloud side, or the PV power station, which is also technically feasible.

In an implementation, the reply information is input by the user via the APP terminal and is in the form of voice or text. The user input on the interaction side is simplified, such that the user only needs to reply to the inquiry instructions via voice or text input. This facilitates information interaction between the user and the analysis and processing unit, lowers the technical threshold for the user to reply to questions, and makes the user more proactive in cooperating with abnormality resolving. It not only enhances user experience but also enables better management of the PV power station.

Taking the handling of abnormal battery temperature rise in the background art as an example, after the abnormality instruction is received, retrieval and invocation is performed from the database to obtain visible factors causing the abnormality, rather than factors internal equipment operation faults, including external ambient temperature, a foreign object around the battery that may cause temperature rise, and reflective irradiation on the storage battery. The LLM then generates a plurality of inquiry instructions, such as "Has the local temperature risen?" and "Is there any foreign object around the storage battery?" The inquiry instructions are sent to the user's APP terminal to wake up the APP terminal. If the user replies "Yes" to "Has the local temperature risen?", a further inquiry instruction "By how many degrees has it risen?" is sent to the user. If the temperature has indeed risen suddenly, it is determined that the battery temperature rise is environmentally induced, and the inquiry is terminated. If the user replies "No", another inquiry instruction "Is there any foreign object around the storage battery?" is sent. Then, based on the user's reply of "Yes" or "No", a targeted subsequent inquiry instruction is sent. For example, if there is a foreign object, the user is guided to remove it to eliminate the abnormality from the environmental aspect. However, this convenient interaction cannot be easily achieved in the prior art. In addition, if the cause of the excessive battery temperature rise still cannot be determined after all environmental abnormalities are ruled out, comprehensive self-inspection of the PV power station or manual intervention may be initiated, or an execution instruction may be sent to shut down certain circuits for further analysis and determination of the cause. There are many implementation methods for troubleshooting abnormalities through equipment self-inspection in the prior art, but they do not involve the protection scope of the present disclosure relating to eliminating environmental factors through interaction. Therefore, no further elaboration is made on troubleshooting abnormalities through equipment self-inspection.

Taking "decreased power generation of solar panels" as another example, environmental factors causing this abnormality may include "obstructions around the solar panels" and "cracked solar panels". The analysis of the abnormality can be specified to a particular solar panel, and the inquiry instructions are directly refined, such as "Please check if there is any obstruction around the solar panel numbered XX?" and "Please check if the solar panel numbered XX is damaged?". The cause of the abnormality can be determined according to the user's reply information, thereby eliminating or resolving the abnormality.

It can be seen that through the interaction with the user via the APP terminal, information can be reversely acquired from the user to supplement the abnormality resolving solution. This facilitates the method to accurately provide suggestions to the user and formulate more accurate solutions.

In addition, based on the detection information, learning and recording of the user's electricity consumption habits can be achieved. Abnormalities may also be caused by sudden changes in electricity consumption. In such a working condition, it cannot be determined whether it is a temporary short-term change in electricity consumption (such as reduced electricity consumption due to the user's business trip) or a long-term change (such as the introduction of a new electrical appliance into the household). Therefore, an inquiry instruction can be sent to the user to determine the cause of the electricity consumption change. After the specific cause is determined, this situation can be recorded. For example, if it is only a temporary electricity consumption change, the abnormality alarm can be directly canceled. If it is a long-term electricity consumption change, an execution instruction is sent to adjust the load usage prediction, update the electricity consumption habit record, and increase the regular storage capacity of the battery at the PV power station.

In summary, based on the specific cases, the interactive automated management method for a PV power station in the embodiment is based on the abnormality detection of the PV power station. When an abnormality occurs, a natural language-based inquiry instruction is generated and sent to the user to determine a condition related to the abnormality, such as an environmental condition, a manual adjustment made to electricity consumption, and external equipment damage. Through effective iterative interactions with the user, a false alarm caused by the environmental condition is avoided, thereby improving the abnormality handling efficiency, saving human and material resources, reducing operation and maintenance costs, and effectively enhancing user experience.

### Embodiment 2

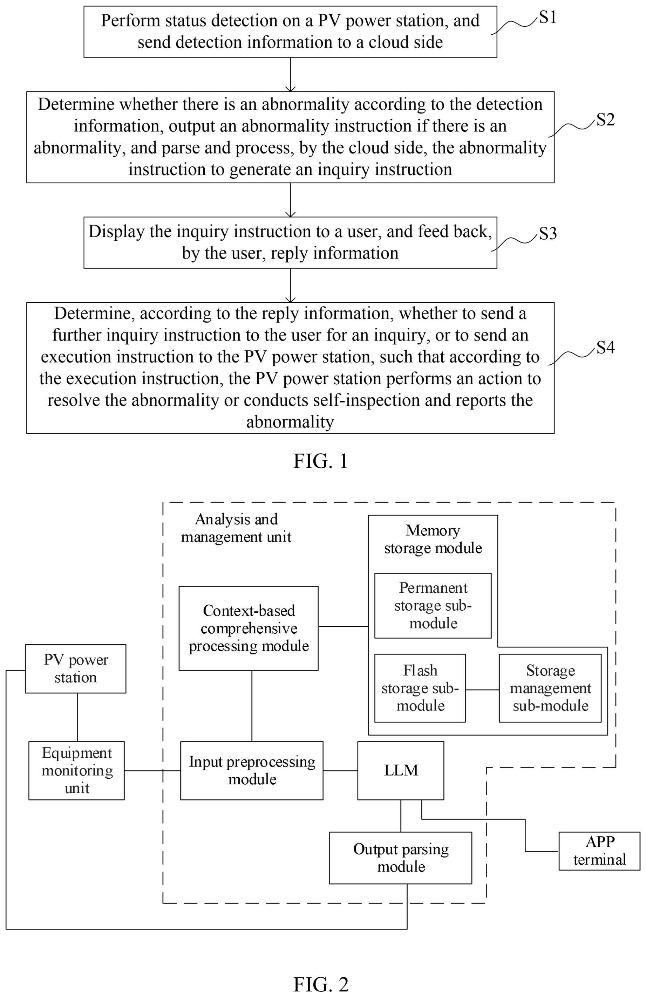

This embodiment provides an interactive automated management system for a PV power station, as shown in FIG. 2, which includes:
an equipment monitoring unit, configured to perform status detection on a PV power station, record detection information, and send the detection information to an analysis and management unit;
the analysis and management unit, configured to receive the detection information, determine whether there is an abnormality according to the detection information, output an abnormality instruction if there is an abnormality, parse and process the abnormality instruction to generate an inquiry instruction, and send the inquiry instruction to an APP terminal; and
the APP terminal, provided on a user side, and configured to receive and display the inquiry instruction to a user, where the user inputs reply information via the APP terminal, and the reply information is sent to the analysis and management unit;
where, according to the reply information, the analysis and management unit determines whether to send a further inquiry instruction to the user for an inquiry, or to send an execution instruction to the PV power station, such that according to the execution instruction, the PV power station performs an action to resolve the abnormality or conducts self-inspection and reports the abnormality.

In an implementation, the analysis and management unit includes:
an input preprocessing module, configured to receive the abnormality instruction and perform feature extraction on the abnormality instruction to generate valid feature data;
a context-based comprehensive processing module, connected to the input preprocessing module, and configured to receive the valid feature data, and retrieve data matching the valid feature data to generate a comprehensive input instruction; and
an LLM, connected to the input preprocessing module, and configured to receive and process the comprehensive input instruction to generate the inquiry instruction or the execution instruction.

In the embodiment, the LLM is a currently popular ChatGPT model, which is a natural language processing tool driven by artificial intelligence (AI) technology, capable of conducting conversations by understanding and learning human language, and also capable of interacting according to the context of the conversation. Therefore, in the embodiment, the context-based comprehensive processing module outputs the comprehensive input instruction to the non-word and one-word model to generate the output instruction based on natural language. The ChatGPT model can be either trained using an open-source algorithm to obtain a trained model, or deployed after being fine-tuned based on an open-source model. Taking start-up as an example, fine-tuning can convert the start-up process into a series of conversations, which are taken as training data to fine-tune the LLM, thereby making it more suitable for the start-up scenario.

In an implementation, the analysis and management unit further includes a memory storage module; and the memory storage module is configured to store PV standard data and real-time interaction data and is connected to the context-based comprehensive processing module.

Specifically, the memory storage module includes a permanent storage sub-module and a flash storage sub-module. The permanent storage sub-module is configured to store the PV standard data; and the flash storage sub-module is configured to store the real-time interaction data. The memory storage module includes a storage management sub-module. The storage management sub-module is connected to the LLM, and is configured to receive and update the inquiry instruction and fed-back reply information into the real-time interaction data.

In an implementation, the analysis and management unit further includes an output parsing module. The output parsing module is configured to receive and parse the execution instruction to generate a control instruction. The control instruction is in a machine language format resulting from format parsing. The PV power station receives and executes the control instruction to resolve the abnormality or conduct self-inspection and report the abnormality.

In an implementation, the analysis and management unit is provided on a cloud side, on the APP terminal, or at the PV power station. In the embodiment, the analysis and management unit is preferably provided on the cloud side. Alternatively, the analysis and management unit can be provided on the APP terminal or at the PV power station. This can be adjusted according to the user's usage needs and data processing performance of each side. Moreover, the functional modules in the analysis and management unit can be reasonably split and arranged on one of the APP terminal, the cloud side, and the PV power station. That is to say, the processing of the analysis and management unit is achieved by combining the functional modules of the APP terminal, the cloud side, or the PV power station, which is also technically feasible.

The analysis and management unit of the interactive automated management system for a PV power station in the embodiment is provided on the cloud side or the APP terminal. The user input on the interaction side (the APP terminal) is simplified, such that the user only needs to reply to the inquiry instructions via voice or text input. This facilitates information interaction between the user and the analysis and processing unit, lowers the technical threshold for the user to reply to questions, and makes the user more proactive in cooperating with abnormality resolving. It not only enhances user experience but also enables better management of the PV power station.

In addition, the present disclosure innovatively introduces an LLM (such as the ChatGPT model), which includes an input side for receiving retrieved abnormality instructions in text form and an output side for providing natural language-based inquiry instructions or execution instructions. Both front-end input and back-end processing and output are implemented based on natural language processing, which aligns with the usage needs of conventional users. During the final specific execution, the natural language-based execution instruction is converted into a corresponding format (i.e. converted into a control instruction) for specific execution. This reduces the processing difficulty of PV information, better meets user needs, improves processing efficiency, and enables the automation of abnormality handling.

The following detailed description of the specific embodiments of the present disclosure based on the drawings will help those skilled in the art to understand the above and other objectives, advantages and features of the present disclosure.

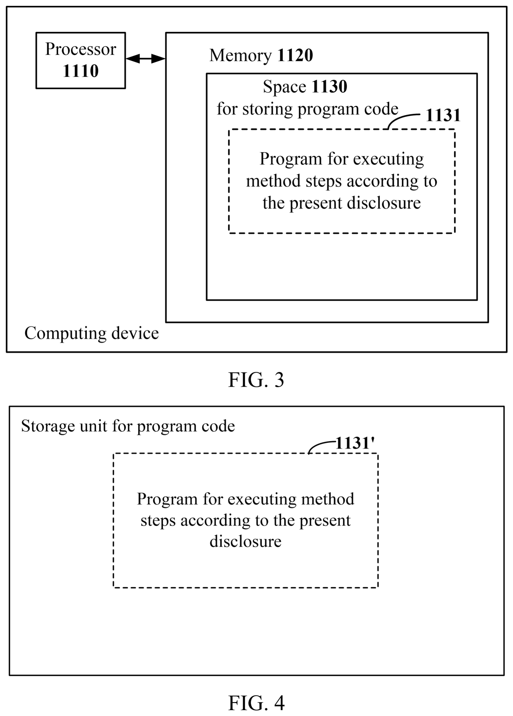

An embodiment of the present disclosure further provides a computing device. Referring to FIG. 3, the computing device includes memory 1120, processor 1110, and a computer program stored in the memory 1120 and executable by the processor 1110. The computer program is stored in space 1130 for storing a program code in the memory 1120, and when executed by the processor 1110, the computer program is configured to implement any one of the steps 1131 of the method according to the present disclosure.

An embodiment of the present disclosure further provides a computer-readable storage medium. Referring to FIG. 4, the computer-readable storage medium includes a storage unit for storing a program code. The storage unit is provided with program 1131' configured to implement the steps of the method according to the present disclosure, and the program is executed by a processor.

An embodiment of the present disclosure further provides a computer program product including an instruction. When the computer program product is run on a computer, the computer is caused to execute the steps of the method according to the present disclosure.

Some or all of the functions in the foregoing embodiments may be implemented by software, hardware, firmware, or any combination thereof. When software is used for implementation, the implementation can be performed in a form of a computer program product in whole or in part. The computer program product includes one or more computer instructions. When the computer program instructions are loaded and executed on a computer, the procedures or functions according to the embodiments of the present disclosure are achieved in whole or in part. The computer may be a general-purpose computer, a dedicated computer, a computer network, or another programmable apparatus. The computer instructions may be stored in a computer-readable storage medium or may be sent from a computer-readable storage medium to another computer-readable storage medium. For example, the computer instructions may be sent from a website, computer, server, or data center to another website, computer, server, or data center in a wired (for example, a coaxial cable, an optical fiber, or a digital subscriber line (DSL)) or wireless (for example, infrared, radio, and microwave, etc.) manner. The computer-readable storage medium may be any usable medium accessible by a computer, or a data storage device, such as a server or a data center, integrating one or more usable media. The usable medium may be a magnetic medium (for example, a floppy disc, a hard disc, or a magnetic tape), an optical medium (for example, a digital video disc (DVD)), a semiconductor medium (for example, a solid state disc (SSD)), etc.

Those skilled in the art should further realize that, the units and algorithmic steps of the examples described in the embodiments of the present disclosure can be implemented with electronic hardware, computer software, or a combination thereof. In order to clearly describe the interchangeability between the hardware and the software, compositions and steps of each example are generally described above according to functions. Whether the functions are performed by hardware or software depends on particular applications and design constraints of the technical solutions. A person skilled in the art may use different methods to implement the described functions for each specific application, but such implementation should not be considered to be beyond the scope of the present disclosure.

A person of ordinary skill in the art will appreciate that all or part of the steps in the method of the aforementioned embodiments can be implemented by instructing a processor via a program. The program may be stored in a computer-readable storage medium. The storage medium is a non-transitory medium, such as random access memory (RAM), read-only memory (ROM), flash memory, hard disc, SSD, magnetic tape, floppy disc, optical disc, and any combination thereof.

In particular, the present disclosure further provides a computing device, including a memory, a processor, and a computer program stored in the memory and executable on the processor, where the computer program is executed by the processor to implement the aforementioned method.

The present disclosure further provides a computer-readable storage medium, where the computer-readable storage medium is configured to store a computer program, and the computer program is executed by a processor to implement the aforementioned method. The computer-readable storage medium is preferably a non-transitory readable storage medium.

The aforementioned embodiments are provided merely to illustrate the technical concept and features of the present disclosure, for the purpose of enabling those skilled in the art to understand the content of the present disclosure and implement the same accordingly, and shall not be construed as limiting the protection scope of the present disclosure. Any equivalent changes or modifications made in accordance with the spirit and essence of the present disclosure shall fall within the protection scope of the present disclosure.

## Claims

1. An interactive automated management method for a photovoltaic (PV) power station, comprising following processing steps:
S1: performing status detection on a PV power station, and sending detection information to a cloud side;
S2: determining whether there is an abnormality according to the detection information, outputting an abnormality instruction if there is an abnormality, and parsing and processing the abnormality instruction to generate an inquiry instruction;
S3: displaying the inquiry instruction to a user, and feeding back, by the user, reply information; and
S4: determining, according to the reply information, whether to send a further inquiry instruction to the user for an inquiry, or to send an execution instruction to the PV power station, such that according to the execution instruction, the PV power station performs an action to resolve the abnormality or conducts self-inspection and reports the abnormality.

2. The interactive automated management method for a PV power station according to claim 1, wherein the parsing and processing the abnormality instruction comprises: retrieving targeted data matching the abnormality instruction from a PV standard database, and generating the inquiry instruction.

3. The interactive automated management method for a PV power station according to claim 2, wherein the retrieving targeted data matching the abnormality instruction from a PV standard database, and generating the inquiry instruction comprises:
reading and processing, by a large language model (LLM), the retrieved targeted data to generate the inquiry instruction.

4. The interactive automated management method for a PV power station according to claim 3, wherein the reading and processing, by an LLM, the retrieved targeted data to generate the inquiry instruction comprises:
sorting the targeted data to generate a plurality of pieces of interaction data, forming the inquiry instruction by the plurality of pieces of interaction data, and performing an interaction with the user according to the plurality of pieces of interaction data in sequence when displaying the inquiry instruction to the user.

5. The interactive automated management method for a PV power station according to claim 3, comprising: converging, when performing the interaction with the user according to the plurality of pieces of interaction data in sequence, the interaction data based on the reply information fed back by the user.

6. The interactive automated management method for a PV power station according to claim 3, wherein the LLM is a chat generative pre-trained transformer (ChatGPT) model.

7. The interactive automated management method for a PV power station according to claim 2, wherein the targeted data matching the abnormality instruction refers to an environmental factor or a human factor causing the abnormality.

8. The interactive automated management method for a PV power station according to any one of claims 1 to 7, wherein the determining whether there is an abnormality according to the detection information, outputting an abnormality instruction if there is an abnormality, and parsing and processing the abnormality instruction to generate an inquiry instruction comprises: retrieving the environmental factor causing the abnormality from the PV standard database, and generating a natural language-based first inquiry instruction;
performing information convergence on the first inquiry instruction after performing an interaction with the user to acquire reply information, retrieving a second inquiry instruction matching data obtained after the information convergence from the PV standard database, and repeating information convergence and retrieving until a cause of the abnormality is determined; and
generating the execution instruction according to the determined cause of the abnormality, such that the PV power station performs the action to resolve the abnormality or conducts self-inspection and reports the abnormality, according to the execution instruction.

9. The interactive automated management method for a PV power station according to claim 8, comprising: performing information convergence on the first inquiry instruction after performing an interaction with the user to acquire reply information, gradually converging from the environmental factor to a non-environmental factor.

10. The interactive automated management method for a PV power station according to claim 8, comprising: updating a basic parameter of a detection model corresponding to the PV power station according to the reply information of the user, and analyzing the abnormality of the PV power station based on the updated detection model.

11. The interactive automated management method for a PV power station according to claim 1, wherein in the step S4, the determining, according to the reply information, whether to send an execution instruction to the PV power station comprises:
confirming the abnormality instruction based on the reply information, generating an execution strategy by performing retrieval and invocation in the PV standard database, and sending the execution instruction, such that the PV power station performs the corresponding action to resolve the abnormality upon receiving the execution instruction.

12. The interactive automated management method for a PV power station according to claim 2, wherein the PV standard database comprises an application programming interface (API) invocation document, a product specification, and PV industry technical data.

13. The interactive automated management method for a PV power station according to claim 1, wherein the inquiry instruction is a natural language-based output instruction.

14. The interactive automated management method for a PV power station according to claim 1, wherein the abnormality instruction comprises a fault instruction, a power abnormality instruction, an electricity consumption abnormality instruction, and a battery management system (BMS) alarm instruction.

15. The interactive automated management method for a PV power station according to claim 1, wherein the step S2 and the step S4 are implemented on a cloud side, on an application (APP) terminal, or at the PV power station.

16. The interactive automated management method for a PV power station according to claim 1, wherein the step S3 is implemented on an APP terminal.

17. The interactive automated management method for a PV power station according to claim 1, wherein the reply information is input by the user via an APP terminal and is in the form of voice or text.

18. An interactive automated management system for a PV power station, comprising:
an equipment monitoring unit, configured to perform status detection on a PV power station, record detection information, and send the detection information to an analysis and management unit;
the analysis and management unit, configured to receive the detection information, determine whether there is an abnormality according to the detection information, output an abnormality instruction if there is an abnormality, parse and process the abnormality instruction to generate an inquiry instruction, and send the inquiry instruction to an APP terminal; and
the APP terminal, provided on a user side, and configured to receive and display the inquiry instruction to a user, wherein the user inputs reply information via the APP terminal, and the reply information is sent to the analysis and management unit;
wherein according to the reply information, the analysis and management unit determines whether to send a further inquiry instruction to the user for an inquiry, or to send an execution instruction to the PV power station, such that according to the execution instruction, the PV power station performs an action to resolve the abnormality or conducts self-inspection and reports the abnormality.

19. The interactive automated management system for a PV power station according to claim 18, wherein the analysis and management unit comprises:
an input preprocessing module, configured to receive the abnormality instruction and perform feature extraction on the abnormality instruction to generate valid feature data;
a context-based comprehensive processing module, connected to the input preprocessing module, and configured to receive the valid feature data, and retrieve data matching the valid feature data to generate a comprehensive input instruction; and
an LLM, connected to the input preprocessing module, and configured to receive and process the comprehensive input instruction to generate the inquiry instruction or the execution instruction.

20. The interactive automated management system for a PV power station according to claim 19, wherein the analysis and management unit further comprises a memory storage module; and the memory storage module is configured to store PV standard data and real-time interaction data, and is connected to the context-based comprehensive processing module.

21. The interactive automated management system for a PV power station according to claim 20, wherein the memory storage module comprises a permanent storage sub-module and a flash storage sub-module; the permanent storage sub-module is configured to store the PV standard data; and the flash storage sub-module is configured to store the real-time interaction data.

22. The interactive automated management system for a PV power station according to claim 21, wherein the memory storage module comprises a storage management sub-module; and the storage management sub-module is connected to the LLM, and is configured to receive and update the inquiry instruction and fed-back reply information into the real-time interaction data.

23. The interactive automated management system for a PV power station according to claim 18, wherein the analysis and management unit further comprises an output parsing module; the output parsing module is configured to receive and parse the execution instruction to generate a control instruction; the control instruction is in a machine language format resulting from format parsing; and the PV power station receives and executes the control instruction to resolve the abnormality or conduct self-inspection and report the abnormality.

24. The interactive automated management system for a PV power station according to any one of claims 18 to 23, wherein the analysis and management unit is provided on a cloud side, on the APP terminal, or at the PV power station.
